(19) Europäisches Patentamt
European Patent Office
Office européen des brevets

(11) **EP 1 816 107 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(51) Int Cl.:
*C02F 1/52* (2006.01)  *B01D 21/00* (2006.01)
*G01F 23/296* (2006.01)  *G01S 15/00* (2006.01)

(21) Anmeldenummer: 06101327.2

(22) Anmeldetag: **06.02.2006**

(54) **Abwasser-Sedimentationsanlage**

Waste water sedimentation plant

Installation pour la sédimentation d'eaux usées

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**08.08.2007 Patentblatt 2007/32**

(73) Patentinhaber: **Hach Lange GmbH**
**14163 Berlin (DE)**

(72) Erfinder:
• **Battefeld, Manfred**
**40211 Düsseldorf (DE)**
• **Jonak, Andreas**
**40667 Meerbusch (DE)**
• **Heidemanns, Lothar**
**41352 Korschenbroich (DE)**
• **Leyer, Axel**
**41199 Mönchengladbach (DE)**
• **Schuster, Michael**
**41462 Neuss (DE)**

(74) Vertreter: **Eberlein, Jasper**
**Patentanwälte ter Smitten**
**Burgunder Str. 29**
**40549 Düsseldorf (DE)**

(56) Entgegenhaltungen:
**EP-A- 0 901 020    DE-A1- 10 325 953**
**GB-A- 1 445 485    US-A- 4 121 094**
**US-A- 4 162 473    US-A- 5 946 967**
**US-B1- 6 212 943**

**Beschreibung**

Die Erfindung bezieht sich auf eine Abwasser-Sedimentationsanlage zur Trennung von Abwasser-Feststoffen von Abwasser-Flüssigkeit in einem Sedimentationsbecken, wobei die Höhe des Schlammspiegels in dem Abwasser mit einer Ultraschall-Schlammspiegelsonde bestimmt wird, auf eine Schlammspiegelsonde hierfür und auf ein Verfahren zu Ermittlung der Schlammspiegel-Entfernung.

Die Bestimmung der Höhe des Schlammspiegels in dem Abwasser, d. h. der Höhe der oberen Trennschicht zwischen den abgesunkenen Feststoffen und der Flüssigkeit des Abwassers erfolgt durch eine Schlammspiegelsonde, die in dem Abwasser knapp unterhalb der Abwasser-Oberfläche angeordnet ist. Die Schlammspiegelsonde weist einen Ultraschallkopf auf, der nach senkrecht unten emittiert und die von dem Boden des Sedimentationsbeckens, von dem abgesunkenen Schlamm und/oder der Trennschicht bzw. dem Schlammspiegel reflektierten und nach senkrecht oben laufenden Ultraschall-Wellen empfängt.

Zur Kompensation der temperaturabhängigen Laufzeitunterschiede von Ultraschallwellen in dem Abwasser ist aus EP 0 901 020 A2 bekannt, aus der Reflektion des Ultraschallsignales am Beckenboden auf die Temperatur der Flüssigkeit zurückzuschließen, und auf diese Weise die Messwerte des Ultraschallsensors entsprechend temperaturabhängig korrigieren zu können.

Aus US 4,162,473 A ist ein Ultraschallsensor bekannt, der oberhalb eines Flüssigkeitsbeckens angeordnet ist und die Höhe des Flüssigkeitspegels in dem Becken ermittelt. Zur Temperaturkompensation der Messwerte des Ultraschallsensors ist ein Lufttemperatur-Sensor vorgesehen.

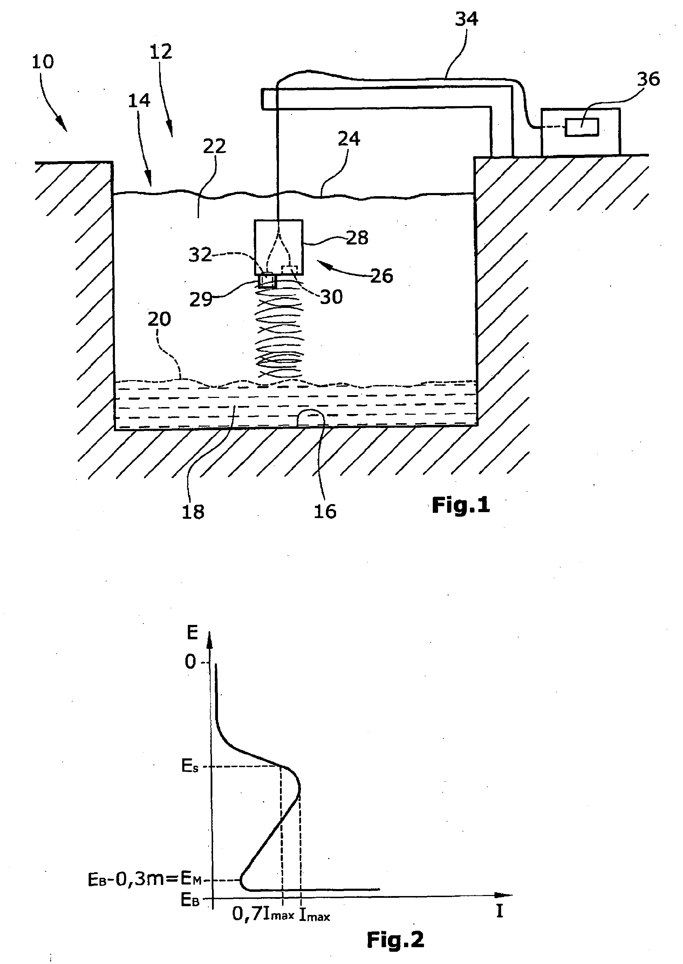

In der Praxis hat sich eine sogenannte dynamische Schlammspiegel-Bestimmung bewährt. Diese wird im Folgenden anhand des Diagramms der Figur 2 erläutert. Nach der ersten Installation der Schlammspiegelsonde wird die Entfernung $E_B$ des Bodens des Sedimentationsbeckens von dem Ultraschallkopf in einer Auswerteinrichtung fest abgespeichert. Bei den folgenden Schlammspiegel-Bestimmungen, d. h. bei der Bestimmung der Entfernung $E_S$ des Schlammspiegels von der Ultraschallsonde, wird zunächst das Ultraschallprofil aufgenommen, wie es in dem Diagramm der Figur 2 dargestellt ist. Der Schlammspiegel, also die Entfernung Es des Schlammspiegels von der Ultraschallsonde, ist definiert durch den ersten Punkt des Ultraschallintensitäts-Profils von dem Ultraschallkopf aus gesehen, der beispielsweise die 0,7-fache Ultraschall-Intensität des Intensitäts-Maximums $I_{Max}$ aufweist, also die Intensität des Intensitäts-Maximums $I_{Max}$ multipliziert mit einem Bezugsfaktor < 1,0. Auf diese Weise wird sicher gestellt, dass bei relativ schwachen Ultraschall-Signalen der Schlammspiegel bzw. die Schlammspiegel-Entfernung Es in gleicher Weise bestimmt wird, wie bei starken empfangenen Ultraschall-Signalen.

Die größte Intensität der reflektierten empfangenen Ultraschallsignale rührt häufig vom Boden des Sedimentationsbeckens her. Das vom Sedimentationsbecken-Boden reflektierte und empfangene Ultraschallsignal wird bei der Bestimmung des Intensitäts-Maximums $I_{Max}$ nicht herangezogen. Dies wird dadurch realisiert, dass die in Bodennähe reflektierten Ultraschall-Signale maskiert, d. h. für die Ermittlung des Intensitäts-Maximums $I_{Max}$ nicht herangezogen werden. Beispielsweise werden alle Ultraschall-Signale, die innerhalb einer Maskierungshöhe von 30 cm oberhalb des Absetzbecken-Bodens liegen, bei der Ermittlung des Intensitäts-Maximums $I_{Max}$ nicht berücksichtigt.

Im Betrieb hat sich jedoch gezeigt, dass es immer wieder vorkam, dass relativ hohe Intensitätswerte bei der Ermittlung des Intensitäts-Maximums berücksichtigt wurden, die von in Bodennähe reflektierten Ultraschall-Signalen stammten.

Aufgabe der Erfindung ist es daher, eine Sedimentationsanlage mit einer Ultraschall-Schlammspiegelsonde, eine Ultraschall-Schlammspiegelsonde bzw. ein Verfahren zu schaffen, wodurch eine präzise und zuverlässige Ermittlung der Höhe des Schlammspiegels in dem Abwasser ermöglicht wird.

Diese Aufgabe wird erfindungsgemäß gelöst mit den Merkmalen des Patentanspruches 1, 4 bzw. 5.

Bei der erfindungsgemäßen Sedimentationsanlage weist die Schlammspiegelsonde einen Temperatursensor auf, der die Abwasser-Temperatur bestimmt. Hierdurch kann zu jeder Ultraschall-Entfernungs-Messung zeitgleich die Temperatur des Abwassers bestimmt werden. Vorzugsweise ist eine Auswerteeinrichtung vorgesehen, die mit der von dem Temperatursensor ermittelten Abwasser-Temperatur den von dem Ultraschallkopf ermittelten Entfernungswert E korrigiert.

Die Geschwindigkeit des Schalls in Abwasser ist abhängig von der Temperatur des Abwassers. Bei einer Temperaturänderung von 10°C ändert sich die Schallgeschwindigkeit in der Abwasser-Flüssigkeit um ungefähr 2,5 %. In der Praxis sind Temperaturschwankungen des Abwassers von rund 20°C und mehr über das gesamte Jahr keine Seltenheit. Bei einer Entfernung des Ultraschallkopfes der Schlammspiegelsonde von dem Schlammspiegel von 3 - 6 m ergibt sich aus der Temperaturabhängigkeit der Schallgeschwindigkeit in dem Abwasser bereits eine Messungenauigkeit von 15 - 30 cm. Eine Messungenauigkeit von 15 - 30 cm stellt aber u. U. eine erhebliche Ungenauigkeit in Bezug auf nachfolgende Berechnungen dar. Dies gilt insbesondere für die Dynamische Schlammspiegel-Ermittlung, bei der zunächst das Intensitäts-Maximum bestimmt werden muss. Die unvermeidbare Messungenauigkeit von 15 - 30 cm liegt in der gleichen Größenordnung wie die Maskierungshöhe, d. h. die Höhe des Bereiches oberhalb des Sedimentationsbecken-Bodens, der bei der Ermittlung des Intensitäts-Maximums $I_{Max}$ ausgeblendet wird, da die vom Boden reflektierten Ultraschallwellen nicht in die Bestimmung des Intensitäts-Maximums mit eingehen dürfen.

Die Entfernung des Reflektionsortes eines empfangenen Ultraschall-Signals wird über die Laufzeit bestimmt. Die Schallgeschwindigkeit in Wasser steigt mit zunehmender Temperatur an, nämlich von ca. 1410 m/s bei 0° C auf rund 1540 m/s bei 60 °C. Dies hat zur Folge, dass bei hohen Temperaturen die von dem Sedimentationsbecken-Boden reflektierten Ultraschall-Signale in die Ermittlung des Intensitäts-Maximums $I_{Max}$ u. U. mit eingehen. Hierdurch wird das Intensitäts-Maximum erheblich höher angenommen, als es tatsächlich dann ist, wenn die vom Boden reflektierten Ultraschall-Signale ausgeblendet werden.

Durch den Temperatursensor wird die Temperatur des Abwassers bestimmt und werden die Messwerte durch die Auswerteeinrichtung entsprechend der gemessenen Temperatur korrigiert. Auf diese Weise werden die vom Beckenboden reflektierten Ultraschallsignale mit großer Sicherheit und bei jeder Abwasser-Temperatur ausgeblendet, so dass aus Abwassertemperatur-Schwankungen resultierende Fehlmessungen zuverlässig vermieden. Ferner kann die Maskierungshöhe, also die Höhe über dem Absetzbecken-Boden, innerhalb der die reflektierten und empfangen Ultraschall-Signale nicht zur Bestimmung des Inten,sitäts-Maximums $I_{Max}$ herangezogen werden, reduziert werden, da eine entsprechende Sicherheit für temperaturbedingte Ungenauigkeiten nicht mehr vorgesehen werden muss.

Mit der Integration eines Temperatursensors in die Schlammspiegelsonde und der temperaturabhängigen Messwert-Korrektur wird auf einfache Weise die Möglichkeit geschaffen, die Bestimmung der Schlammspiegelhöhe temperaturkorrigiert vorzunehmen, d. h. die Bestimmung der Entfernung bzw. der absoluten Höhe des Schlammspiegels in dem Absetzbecken auf Grundlage der Schallgeschwindigkeit bei der gemessenen Abwassertemperatur fehlerfrei und sehr genau zu ermitteln.

Vorzugsweise weist die Schlammspiegelsonde ein flüssigkeitsdichtes Gehäuse auf, und ist der Temperatursensor wärmeleitend mit der Innenseite des Gehäuses verbunden. Der Temperatursensor kann unmittelbar auf die Innenseite des Gehäuses aufgebracht sein. Wenn der Temperatursensor entfernt von der Innenseite des Gehäuses angeordnet ist, wie dies beispielsweise bei einem in einen integrierten Schaltkreis integrierten Temperatursensor der Fall sein kann, ist der Temperatursensor durch ein Wärmeleitelement, beispielsweise aus Metall, gut wärmeleitend mit dem Gehäuse verbunden. Durch die gute thermische Ankopplung des Temperatursensors an die die Schlammspiegelsonde umgebende Abwasser- Flüssigkeit liegt nach einer Temperaturveränderung des Gehäuses sehr schnell die tatsächliche Abwasser-Temperatur auch an dem Temperatursensor an. Dies spielt insbesondere dann eine Rolle, wenn die Schlammspiegelsonde aus der Umgebungsluft kommend in das Abwasser eingetaucht wird oder wenn Abwasser anderer Temperatur in das Sedimentationsbecken einfließt.

Gemäß einer bevorzugten Ausgestaltung ist der Temperatursensor in einer topfförmigen Ausstülpung des Gehäuses angeordnet. Hierdurch hat der Temperatursensor zum Gehäuse und zu dem das Gehäuse umgebenden Abwasser eine große Kontaktfläche. Durch die relativ große Kontaktfläche wird eine schnelle Angleichung der Temperatursensor-Eigentemperatur mit der des Abwassers sichergestellt. Dies ist insbesondere beim erstmaligen Eintauchen der Schlammspiegelsonde in das Abwasser von Bedeutung. Auch beim Einfließen neuen Abwassers in das Sedimentationsbecken kann sich die Temperatur erheblich und schnell ändern, so dass auch hierbei eine schnelle Ermittlung der neuen Abwassertemperatur sichergestellt ist.

Gemäß eines nebengeordneten Patentanspruches ist eine Ultraschall-Schlammspiegelsonde für den Einsatz in einer Abwasser-Sedimentationsanlage gemäß Patentanspruch 1 vorgesehen, wobei die Schlammspiegelsonde die Merkmale des Patentanspruches 1 aufweist.

Gemäß eines weiteren nebengeordneten Patentanspruches ist ein Verfahren zur Ermittlung der Schlammspiegel-Entfernung $E_s$ von einem Ultraschallkopf einer Ultraschall-Schlammspiegelsonde in einer Abwasser-Sedimentationsanlage zur Trennung von Abwasser-Feststoffen von Abwasser-Flüssigkeit vorgesehen, wobei die Schlammspiegelsonde in dem Abwasser oberhalb des Bodens des Sedimentationsbeckens angeordnet ist, der Ultraschallkopf nach unten emittiert und die Schlammspiegelsonde einen Temperatursensor aufweist, der die Abwassertemperatur bestimmt, wobei das Verfahren folgende Verfahrensschritte aufweist:

- Temperaturkompensation der mit Hilfe der durch den Ultraschallkopf empfangenen Ultraschall-Signale ermittelten Entfernungswerte mit Hilfe der von dem Temperatursensor ermittelten Abwasser-Temperatur,

- Erstellen eines temperaturkorrigierten entfernungsabhängigen Ultraschall-Intensitätsprofiles,

- Ausblenden eines Teiles des Intensitätsprofiles bis zu einer Maskierungshöhe oberhalb der Bodenentfernung $E_B$,

- Ermittlung des Intensitäts-Maximums $I_{Max}$ des verbleibenden Intensitätsprofiles, und

- Ermittlung der Schlammspiegel-Entfernung $E_s$ an dem Punkt geringster Entfernung von dem Ultraschallkopf, an dem die Intensität die Bezugsintensität erreicht, die dem Intensitäts-Maximum $I_{Max}$ multipliziert mit einem Bezugsfaktor entspricht, der kleiner als 1,0 ist.

Im Folgenden wird unter Bezugnahme auf die Zeichnungen ein Ausführungsbeispiel der Erfindung näher erläutert.

Es zeigen:

Fig. 1 Eine Abwasser-Sedimentationsanlage mit einer Schlammspiegelsonde, der ein Temperatursensor zugeordnet ist, und

Fig.2 ein Diagramm der Entfernung E über die Intensität der empfangenen Ultraschall-Signale.

In der Figur 1 ist eine Abwasser-Sedimentationsanlage 10 zur Trennung von Abwasser-Feststoffen von Abwasser-Flüssigkeit dargestellt. Die Abwasser-Sedimentationsanlage 10 weist ein Sedimentationsbecken 12 auf, das im Freien angeordnet ist. Im Betrieb ist das Sedimentationsbecken 12 mit Abwasser 14 gefüllt. Das Abwasser 14 ist bei Einlauf in das Sedimentationsbecken eine Mischung aus Abwasser-Flüssigkeit und Abwasser-Feststoffen. Nach dem Einlauf des Abwassers 14 in das Sedimentationsbecken 12 und Beruhigung des Abwassers trennen sich durch Schwerkraft die Feststoffe von der Flüssigkeit. Der größte Teil der Abwasser-Feststoffe sinkt auf den Boden 16 des Sedimentationsbeckens 12 ab und bildet dort auf diese Weise eine Schlammschicht 18. Die obere Grenzschicht der Schlammschicht 18 bildet einen Schlammspiegel 20. Oberhalb des Schlammspiegels 20 ist die Abwasser-Flüssigkeit 22 angeordnet, die durch die Sedimentation von einem Großteil der ursprünglich in ihr enthaltenen und schwebenden Feststoffe gereinigt ist.

In dem Sedimentationsbecken 12 und in der Flüssigkeit 22 ist knapp unterhalb der Abwasser-Oberfläche 24 eine Schlammspiegelsonde 26 hängend platziert. Die Schlammspiegelsonde 26 weist ein flüssigkeitsdichtes Kunststoff-Gehäuse 28 auf, in dem ein Ultraschallkopf 30 sowie ein Temperatursensor 32 angeordnet sind. Der Ultraschallkopf 30 ist senkrecht nach unten gerichtet, so dass er die Schallsignale nach senkrecht unten abgibt und die von senkrecht unten kommenden Schallsignale, die durch den Boden 16, die Schlammschicht 18 und den Schlammspiegel 20 reflektiert werden, empfängt. Der Temperatursensor 32 ist unmittelbar an der Innenseite des Kunststoff-Gehäuses 28 in einem nach außen gestülpten Topf 29 wärmeleitend eingesteckt.

Über eine Datenleitung 34 werden die Daten von dem Ultraschallkopf 30 und dem Temperatursensor 32 an eine landseitige Auswerteeinrichtung 36 übertragen und ausgewertet.

In der Auswerteeinheit 36 wird zunächst anhand der von dem Temperatursensor 32 ermittelten Temperatur des Abwassers 14 der ermittelte Entfernungs-Wert entsprechend der gemessenen Temperatur korrigiert. Die Korrektur kann durch eine arithmetische Operation durchgeführt werden, kann jedoch auch durch Abruf einer entsprechenden Korrektur aus einem gespeicherten Kennfeld erfolgen. Auf diese Weise kann die Auswerteeinrichtung 36 für jedes empfangene Ultraschall-Signal einen temperaturkompensierten Entfernungs-Wert ermitteln. Anschließend wird für ein auf diese Weise komplett erstelltes Profil, wie es in Figur 2 dargestellt ist, der Bodennahbereich unterhalb einer Maskierungs-Entfernung $E_M$ für die folgenden Betrachtungen ausgeblendet. Die Maskierungs-Entfernung $E_M$ ermittelt die Auswerteeinrichtung aus der Bodenentfernung $E_B$, die in der Auswerteeinrichtung 36 vor der erstmaligen Inbetriebnahme eingespeichert wurde, abzüglich einer Maskierungshöhe von beispielsweise vorliegend 30 cm:

$$E_M = E_B - 0,30 \text{ m}$$

Von der verbleibenden auf diese Weise maskierten Intensitätskurve wird das Intensitäts-Maximum $I_{Max}$ ermittelt. Anschließend wird ein um einen festgelegten Bezugsfaktor von beispielsweise 0,7 reduzierte Bezugsintensität ermittelt, die demnach $I_{Max} \cdot 0,7$ beträgt. Schließlich wird der Punkt in der Intensitätskurve ermittelt, bei dem von dem Ultraschallkopf 30 aus betrachtet, die Intensität erstmals $I_{Max} \cdot 0,7$ erreicht. Die Entfernung dieses Punktes ist die Entfernung $E_s$ des Schlammspiegels von dem Ultraschallkopf 30.

Durch die Temperaturkompensation des von dem Ultraschallkopf 30 bestimmten Entfernungswertes lässt sich die Höhe des Schlammspiegels 20 erheblich genauer und vor allem fehlerfrei bestimmen, als dies ohne Temperaturkompensation möglich wäre. Auf diese Weise wird auch die nachfolgende Steuerung der Sedimentation bzw. des gesamten Klärprozesses präzisiert und ggf. sogar beschleunigt.

**Patentansprüche**

1. Abwasser-Sedimentationsanlage (10) zur Trennung von Abwasser-Feststoffen von Abwasser-Flüssigkeit (22) in einem Sedimentationsbecken (12), mit einer Ultraschall-Schlammspiegelsonde (26) zur Bestimmung der Höhe des Schlammspiegels (20) in dem Abwasser (14),
   wobei die Schlammspiegelsonde (26) einen Ultraschallkopf (30) aufweist und in dem Abwasser (14) oberhalb des Bodens (16) des Sedimentationsbeckens (12) angeordnet ist und der Ultraschallkopf (30) nach unten emittiert,
   **dadurch gekennzeichnet,**
   **dass** die Schlammspiegelsonde (26) einen Temperatursensor (32) aufweist, der die Abwasser-Temperatur bestimmt.

2. Abwasser-Sedimentationsanlage nach Anspruch 1, **dadurch gekennzeichnet, dass** eine Auswerteeinrichtung (36) vorgesehen ist, die mit der von dem Temperatursensor (32) ermittelten Abwasser-Temperatur den von dem Ultraschallkopf (30) emittierten Entfernungs-Wert korrigiert.

3.  Abwasser-Sedimentationsanlage nach Anspruch 1 oder 2, **dadurch gekennzeichnet, dass** die Schlammspiegelsonde (26) ein flüssigkeitsdichtes Gehäuse (28) aufweist und der Temperatursensor (32) wärmeleitend mit der Innenseite des Gehäuses (28) verbunden ist.

4.  Ultraschall-Schlammspiegelsonde (26) zur Bestimmung der Höhe des Schlammspiegels (20) in Abwasser (14) in einem Sedimentationsbecken (12) einer Abwasser-Sedimentationsanlage (10) gemäß Patentanspruch 1, mit
    einem Ultraschallkopf (30) in dem Abwasser (14) oberhalb des Bodens (16) des Sedimentationsbeckens (12), wobei der Ultraschallkopf (30) nach unten emittiert,
    einem Abwasser-Temperatursensor (32), der die Abwasser-Temperatur bestimmt, und
    einem flüssigkeitsdichten Gehäuse (28), das den Ultraschallkopf (30) und den Temperatursensor (32) aufweist.

5.  Verfahren zur Ermittlung der Schlammspiegel-Entfernung ($E_s$) von einem Ultraschallkopf (30) einer Ultraschall-Schlammspiegelsonde (26) in einer Abwasser-Sedimentationsanlage (10) zur Trennung von Abwasser-Feststoffen von Abwasser-Flüssigkeit, wobei die Schlammspiegelsonde (26) in dem Abwasser (14) oberhalb des Bodens (16) des Sedimentationsbeckens (12) angeordnet ist, der Ultraschallkopf (30) nach unten emittiert und die Schlammspiegelsonde (26) einen Temperatursensor (32) aufweist, der die Abwassertemperatur bestimmt, mit den Verfahrensschritten:

    - Temperaturkompensation der mit Hilfe der durch den Ultraschallkopf empfangenen Ultraschall-Signale ermittelten Entfernungswerte mit Hilfe der von dem Temperatursensor (32) ermittelten Abwasser-Temperatur,
    - Erstellen eines temperaturkorrigierten entfernungsabhängigen Ultraschall-Intensitätsprofiles,
    - Ausblenden eines Teiles des Intensitätsprofiles bis zu einer Maskierungshöhe oberhalb der Bodenentfernung ($E_B$),
    - Ermittlung des Intensitäts-Maximums ($I_{Max}$) des verbleibenden Intensitätsprofiles, und
    - Ermittlung der Schlammspiegel-Entfernung ($E_s$) an dem Punkt geringster Entfernung von dem Ultraschallkopf (30), an dem die Intensität die Bezugsintensität erreicht, die dem Intensitäts-Maximum ($I_{Max}$) multipliziert mit einem Bezugsfaktor entspricht, der kleiner als 1,0 ist.

## Claims

1.  Waste water sedimentation plant (10) for separating solids in waste water from liquid waste water (22) in a sedimentation basin (12), comprising an ultrasound sludge blanket probe (26) for determining the height of the sludge blanket (20) in the waste water (14),
    wherein the sludge blanket probe (26) comprises an ultrasound head (30) and is arranged in the waste water (14) above the bottom (16) of the sedimentation basin (12) and the ultrasound head (30) emits downward,
    **characterized in that**
    the sludge blanket probe (26) comprises a temperature sensor (32) that determines the waste water temperature.

2.  Waste water sedimentation plant of claim 1, **characterized in that** a evaluating means (36) is provided which uses the waste water temperature determined by the temperature sensor (32) to correct the distance value emitted by the ultrasound head (30).

3.  Waste water sedimentation plant of claim 1 or 2, **characterized in that** the sludge blanket probe (26) comprises a liquid-tight housing (28) and the temperature sensor (32) is in thermally conductive connection with the inner side of the housing (28).

4.  Ultrasound sludge blanket probe (26) for determining the height of the sludge blanket (20) in waste water (14) in a sedimentation basin (12) of a waste water sedimentation plant (10) according to claim 1, comprising an ultrasound head (30) in the waste water (14) above the bottom (16) of the sedimentation basin (12), said ultrasound head (30) emitting downward,
    a waste water temperature sensor (32) determining the waste water temperature, and
    a liquid-tight housing (28) comprising the ultrasound head (30) and the temperature sensor (32).

5.  Method for determining the distance of a sludge blanket ($E_s$) from an ultrasound head (30) of an ultrasound sludge blanket probe (26) in a waste water sedimentation plant (10) for the separation of solids in the waste water from liquid waste water, wherein the sludge blanket probe (26) is arranged in the waste water (14) above the bottom (16) of the sedimentation basin (12), the ultrasound head (30) emits downward and the sludge blanket probe (26) comprises a temperature sensor (32) that determines the waste water temperature, comprising the following method steps:

    - temperature compensation of the distance values determined by means of the ultrasound signals received by the ultrasound head, the temperature compensation being effected with the waste water temperature determined by the temperature sensor (30),
- establishing a temperature-corrected, distance-dependent ultrasound intensity profile,
- masking a part of the intensity profile up to a masking height above the distance from the bottom ($E_B$),
- determination of the intensity maximum ($I_{Max}$) of the remaining intensity profile, and
- determination of the distance of the sludge blanket ($E_s$) at the point of the shortest distance from the ultrasound head (30) at which the intensity reaches the reference intensity corresponding to the intensity maximum ($I_{Max}$) multiplied by a reference factor that is smaller than 1.0.

## Revendications

1. Installation pour la sédimentation d'eaux usées (20) destinée à la séparation de matières solides d'eaux usées des liquides d'eaux usées (22) dans un basin de sédimentation (12), comprenant une sonde de niveau de boue à ultrason (26) pour déterminer la hauteur du niveau de boue (20) dans les eaux usées (14),
la sonde de niveau de boue à ultrason (26) comprenant une tête à ultrason (20) et étant disposée dans les eaux usées (14) au-dessus du fond (16) du basin de sédimentation (12) et ladite tête à ultrason (30) émettant vers le bas,
**caractérisée en ce que**
la sonde de niveau de boue à ultrason (26) comprend un capteur de température (32) qui détermine la température des eaux usées.

2. Installation pour la sédimentation d'eaux usées selon la revendication 1, **caractérisée en ce qu'**un moyen d'évaluation (36) est prévu qui utilise la température des eaux usées déterminée par ledit capteur de température (32) pour corriger la valeur de distance émise par la tête à ultrason (30).

3. Installation pour la sédimentation d'eaux usées selon la revendication 1 ou 2, **caractérisée en ce que** la sonde de niveau de boue à ultrason (26) comprend un boitier (28) étanche à liquide et le capteur de température (32) est connecté de manière thermo-conductrice à l'intérieure du boitier (28).

4. Sonde de niveau de boue à ultrason (26) pour déterminer la hauteur du niveau de boue (20) dans les eaux usées (14) dans un basin de sédimentation (12) d'une installation de sédimentation d'eaux usées (10) selon la revendication 1, comprenant une tête à ultrason (30) dans les eaux usées (14) au-dessus du fond (16) du basin de sédimentation (12), la tête à ultrason (30) émettant vers le bas, un capteur de température des eaux usées (32) déterminant la température des eaux usées, et un boitier (28) étanche à liquide comprenant ladite tête à ultrason (30) et ledit capteur de température (32).

5. Procédé pour déterminer la distance du niveau de boue ($E_s$) à une tête à ultrason (30) d'une sonde de niveau de boue à ultrason (26) dans une installation de sédimentation d'eaux usée (10) destinée à la séparation de matières solides d'eaux usées des liquides d'eaux usées, ladite sonde de niveau de boue à ultrason (26) étant disposée dans les eaux usées (14) au-dessus du fond (16) du basin de sédimentation (12), ladite tête à ultrason (30) e'mettant vers le bas et ladite sonde de niveau de boue à ultrason (26) comprenant un capteur de température (32) qui détermine la température des eaux usées, comprenant les étapes de procédé suivantes:

- compensation par température des valeurs de distance déterminées au moyen des signaux ultrasons reçus par ladite tête à ultrason (30), la compensation par température utilisant la température des eaux usées déterminée par ledit capteur de température (32),
- établissement d'un profil d'intensité d'ultrason corrigé en température et dépendant de la distance,
- masquage d'une partie du profil d'intensité jusqu'à une hauteur de masquage au-dessus de la distance du fond ($E_B$),
- détermination du maximum de l'intensité ($I_{Max}$) du profil d'intensité résiduel, et
- détermination de la distance du niveau de boue ($E_s$) au point de la distance minimale à la tête à ultrason (30), où l'intensité atteint l#intensité de référence correspondant au maximum de l'intensité ($I_{Max}$) multiplié par un facteur de référence inférieur à 1,0.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0901020 A2

- US 4162473 A